# EUROPEAN PATENT APPLICATION

(11) **EP 1 676 817 A1**
(43) Date of publication of application: **05.07.2006**
(21) Application number: 05008705.5
(22) Date of filing: 21.04.2005
(51) Int. Cl.: C02F 3/12, B01D 69/06, C02F 1/44, B01D 63/14, B01D 65/08

(54) **Submergible membrane filtration module**

(30) Priority: 17.12.2004 GB 0427656
(71) Applicant: McGuinness, Patrick, Co. Derry, Northern Ireland BT809 LU (GB)
(72) Inventor: McGuinness, Patrick, Co. Derry, Northern Ireland BT809 LU (GB)

(57) **Abstract**

A filtration membrane module comprises a filtration module submerged in a liquid within a processing tank. A single filtration module comprises two rectangular shaped sheets of membrane attached back to back and sealed around their outer edges. The backs of these membranes are separated from one another by a flexible material. Filtered water is drawn from within this filtration assembly by a number of permeate draw off points.

By creating a pressure drop across the membrane surface, clean water filters through the membrane into the space between the two membrane sheets and will flow out through one of the permeate draw off points.

The sealed membrane sheet assembly is assembled onto a rigid frame which consists of a number of vertical members, separated by top and bottom horizontal members. The membrane assembly forms a continuous vertical sheet with vertical passageways formed between the folds of these sheets.

## Description

### FIELD OF THE INVENTION

This invention relates to a filtration membrane module used for the filtration of liquids such as activated sludge, flocculated water/wastewater or surface water.

### BACKGROUND OF THE INVENTION

Submerged membranes are used to filter solids from the liquid. Applications for this include the treatment of sewage in which the submerged membrane filters are used to withdraw substantially clean water from activated sludge.

The membranes are positioned within a tank and the tank contains liquid to be filtered. The liquid filters through the submerged membrane, leaving the solids within the tank. The filtered liquid, known as permeate, flows from the membrane through a series of headers to a common outlet from the filtration system.

There are several submerged membrane filtration modules available, the most popular types being the Kubota module and the Zenon module.

The Kubota module consists of plural plate like membrane cartridges having rigidity which are placed in parallel to each other and properly spaced from the adjoining membrane cartridges. A gas-liquid upward flow is generated across the surface of the membranes which acts as a cleaning stream. Liquid is filtered through the membrane and then passes through the rigid plate onto which the membrane is fixed.

The Zenon module consists of a bundles of hollow fibres potted at both ends which are placed vertically within the process tank. Air is introduced below the membrane modules which agitates the membranes to inhibit solids within the tank water from fouling the pores of the membrane. Liquid is filtered through the hollow fibres and then passes through a series of header pipes for collection.

The invention described in this application is a substantially different configuration to all other membrane filtration modules. The submerged membrane filtration modules covered by this invention have the characteristics of very high membrane area per unit volume, a low manufacturing cost and ability to deal with liquids with a high percentage of solids within the process liquid.

### SUMMARY OF THE INVENTION

The present invention has an object to provide a submerged filtration membrane module which facilitates the separation of liquid and solids using the filtration membrane.

To achieve the above objects, a filtration membrane module according to the present invention comprises a filtration module submerged in a liquid within a processing tank. A single filtration module comprises two rectangular shaped sheets of membrane, of equal lengths & widths, attached back to back and sealed around their outer edges. The backs of these membranes are separated from one another by a flexible material which allows filtered water to flow in any direction within the space between the two membrane sheets.
A number of permeate draw off points are attached along this length of membrane and, by creating a pressure drop across the membrane surface, clean water filters through the membrane into the space between the two membrane sheets and will flow out through one of the permeate draw off points.
The sealed membrane sheets, complete with permeate draw off points is assembled onto a rigid frame which consists of a number of vertical members, separated by top and bottom horizontal members. The membrane assembly is fixed around these vertical members and forms a continuous vertical sheet, separated by the vertical members with vertical passageways formed between the folds of these sheets which allow flow in the vertical direction.
The permeate draw off points are connected using sealed connectors to a header pipe which forms part of the filtration module.
A number of these filtration modules can be used to provide the filtration capacity for a desired flow with the overall assembly known as a submerged membrane filtration system.

Another preferable arrangement of the filtration module according to the present invention is arranged such that an aeration device is fitted below the submerged filtration module. This aeration device creates air bubbles which rise to the surface between the membrane sheets, creating a scouring effect across the surface of the membranes. This inhibits solids from adhering to the surface of the membrane and blockings its pores.

Another preferable arrangement of the filtration module according to the present invention is arranged such that a number of these filtration modules are positioned adjacent to each other within a single frame. This has the advantage of allowing a common aeration mechanism for the filter modules which are positioned together.

Another preferable arrangement of the filtration module according to the present invention is arranged such that the aeration devices are assembled as a grid, below one or more membrane filtration modules. The number and type of aeration diffusers will depend on the configuration of the membrane modules but the grid will provide a single assembly which will be advantageous for assembling and disassembling a submerged membrane filtration system.

Another preferable arrangement of the filtration module according to the present invention is arranged such that the aeration grid and the filtration module assembly are fixed in position within a process tank using a framework with two vertical members at either end which allows the grid and filtration module assembly to fit neatly within these two vertical members, allowing the grid and filtration module assembly to slide up and down the framework This arrangement, in which the grid and filtration module assembly can be installed by simply positioning within the frame and then lowering into position, facilitates the assembly/disassembly of the overall submerged membrane filtration system.

Another preferable arrangement of the filtration module according to the present invention is arranged such that the aeration mechanism, which provides a scouring effect, is operated on a cyclic basis. This arrangement, in which the scouring effect is on for a period of time and then off for another period of time has the advantage of creating non stable flows within the process tank which can assist in the scouring effect.

Another preferable arrangement of the filtration module according to the present invention is arranged such that the scouring effect is created by not only an aeration device, but by air and water flow, as opposed to an aeration device. This arrangement, in which the scouring flow is created by a combined flow of water and air is advantageous where oxygen transfer is of less importance and it may be more economical to use a water scouring effect as opposed to aeration.

### BRIEF DESCRIPTION OF THE ATTACHED DRAWINGS

Figure 1 is an isometric view of a single submerged membrane module

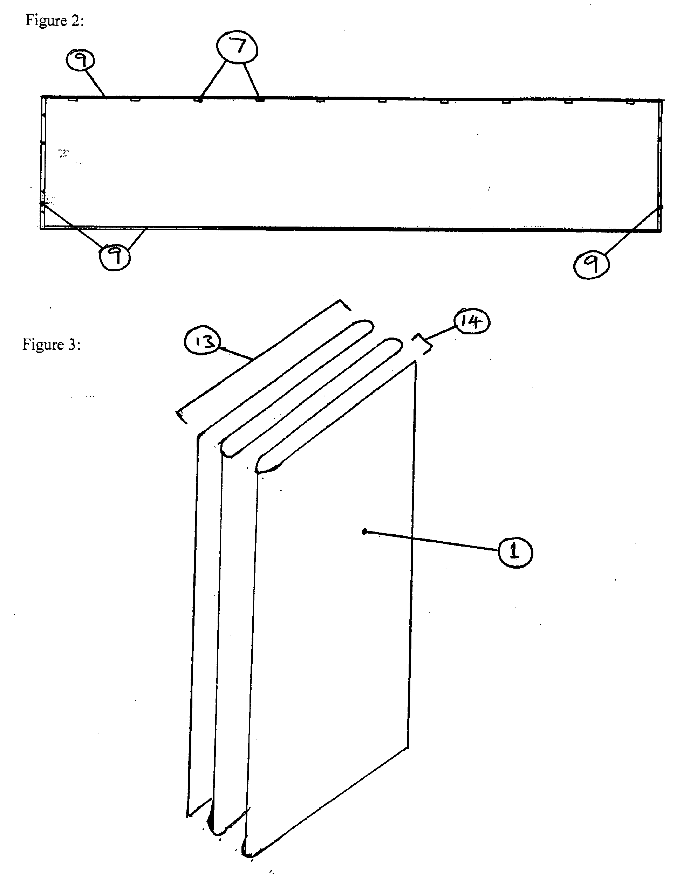

Figure 2 is a schematic drawing of the membrane sheet assembly
Figure 3 is an isometric view of the membrane sheet assembly in its assembled position on the membrane module
Figure 4 is an enlarged isometric view of the membrane sheet assembled around the frame of the module
Figure 5 is a sectional view of the membrane sheet assembly

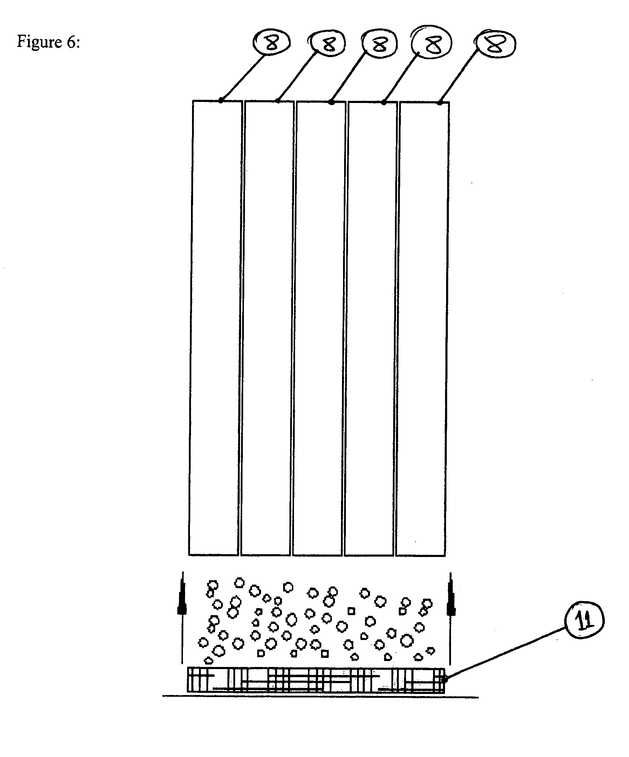

Figure 6 is a drawing of typical assembly of a number of membrane modules, arranged side by side, complete with aeration system
Figure 7 is a schematic drawing of a membrane tank, submerged filtration module and a series of pipework
Figure 8 is an isometric drawing of a typical layout for plural membrane modules assembled together.
Figure 9 is an isometric drawing of a typical layout for membrane modules, the associated framework and the aeration assembly.

### EMBODIMENT

An embodiment of the present invention is described below with reference to the attached drawings.

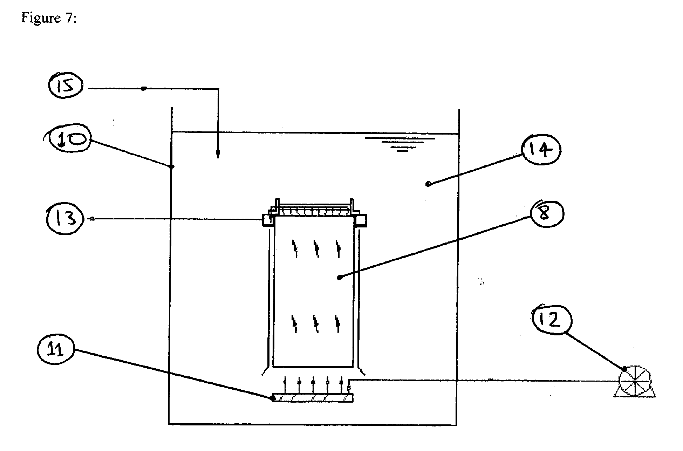

Fig. 7 shows a schematic of a process tank 10 which contains the tank liquid 14 to be filtered. One or more filtration modules are fixed within this tank 10 and an aeration mechanism, typically comprising an air blower 12 and air diffuser mechanism 11 provides air below the filters to create the scouring effect across the membrane surface. The feed liquid 15 may contain microorganisms, suspended solids or other matter which are collectively called solids. The membrane I has a pore size in the ultrafiltration or microfiltration range with pore sizes adequately small enough to retain solids within the process tank 10.

During the filtration process, solids are retained within the process tank 10 while clean water passes through the membranes 1 and ultimately through the clean water outlet 13. The concentration of solids within the tank liquid 14 will increase as the filtration process progresses. Solids may have to be removed from this tank periodically.

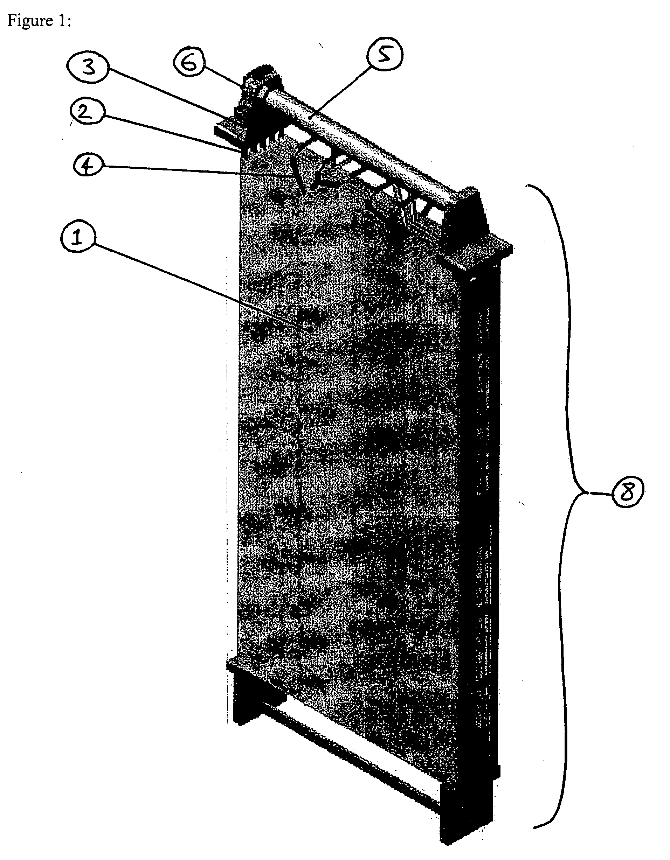

Fig. 1 shows a single submerged membrane module assembly 8 which is used for filtration of liquid. Membrane modules 8 can be made in various sizes and configurations with various header configurations. For example, a membrane module may consist of 10m² total of membrane surface 1, 2no. 5m x 1 m sheets of membrane 14 attached back to back, fixed around a frame which gives a spacing between the membrane sheets of 10mm. A single header would be provided for this module which in turn would connect onto a common header from a number of membrane modules.

The membrane module 8 consists of the module frame assembly 3, the membrane sheet assembly 1, the header pipe 5, the connector tubes 4. The module frame assembly 3 is of rigid structure and is typically manufactured from stainless steel or plastic, thus providing good chemical resistance and good rigidity. This module frame 3 consists of a number of vertical members 2 on either side of the frame 3 around which the membrane sheet assembly 1 may be fixed. The vertical members 2 are vertical and parallel to each other. The number of vertical members 2 will depend on the length of the membrane 1 to be used on a particular submerged membrane module 8 and the width of the module frame assembly 3 will increase with the number of vertical members 2.

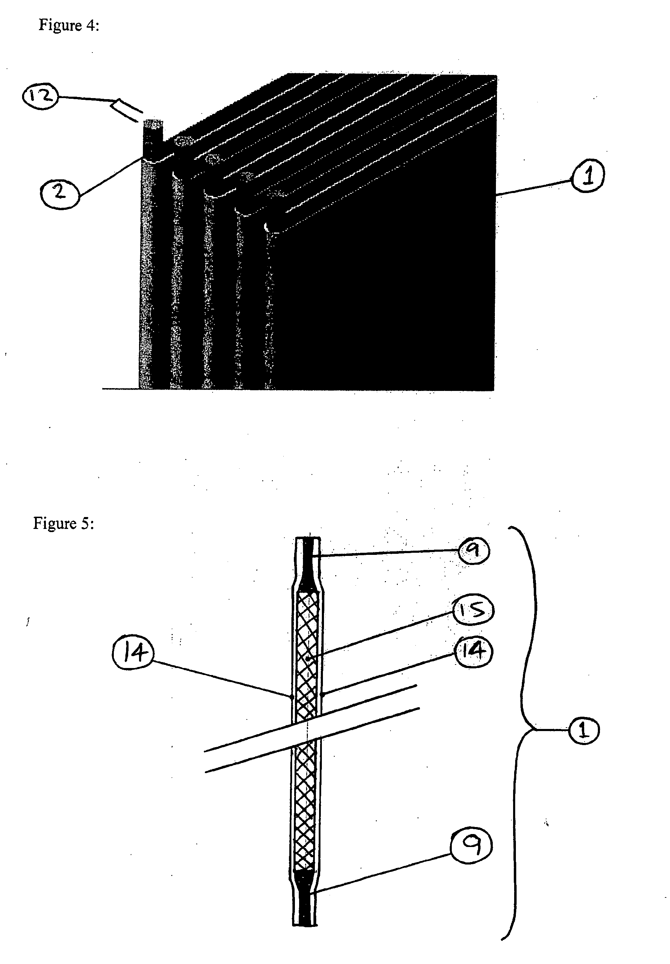

The membrane sheet assembly 1 is fixed around the vertical members 2 from one end of the module frame assembly 3 to the other and back again and so on, as shown in Fig. 3 & 4. In this way, the membrane sheet assembly 1 is folded around the vertical members 2, creating a vertical gap 1 1 equal to the width of the vertical members 2 and the length of the membrane folds 13 equal to the distance between the vertical members 2. This ensures the gap 11 is even between each of the folds and the folds are equal in length. Membrane modules 8 can be made in various sizes and configurations and this will determine the overall length of membrane sheet assembly 1 and the dimensions of the frame 3 and the number of folds. As an example, the membrane sheet assembly 1 would be 5m long assembled into 10no. 500mm long folds 13, each fold having a gap 11 of 10mm to the adjacent fold.

Fig. 5 shows a cross section of a membrane sheet assembly 1. Two membrane sheets 14 are fixed back to back with a spacer material 15 positioned in between. The edges of the membranes are sealed 9 by using a process such as welding or a form of membrane glue to form an envelope like sheet. The spacer material 15 is flexible and allows water to flow in any direction within the space between the membranes 14.

Permeate draw off points 7 are positioned at various points along the membrane sheet assembly 7 and provide sealed connection points to the area between the two membranes 14. These permeate draw off points allow the filtered water to be drawn away from within the space between the membrane sheets 14 on the overall membrane assembly 1.

During filtration, a differential pressure is applied across the membrane 14 surface. This differential pressure is typically provided by a pump applying a sucking action to the clean water outlet 13 or can also be achieved by raising the level of the liquid 14 within the process tank 10 relative to the clean water outlet 13.

By creating a pressure drop across the membrane surface 14, water filters through the membrane 14 and flows within the spacer material 15 to the closest permeate draw off point 7. The filtered water then flows through the connector tubes 4 into the header pipe 5 for that membrane module 8. The filtered water then flows through the clean water outlet 6 into a common header pipe 16 for that assembly.

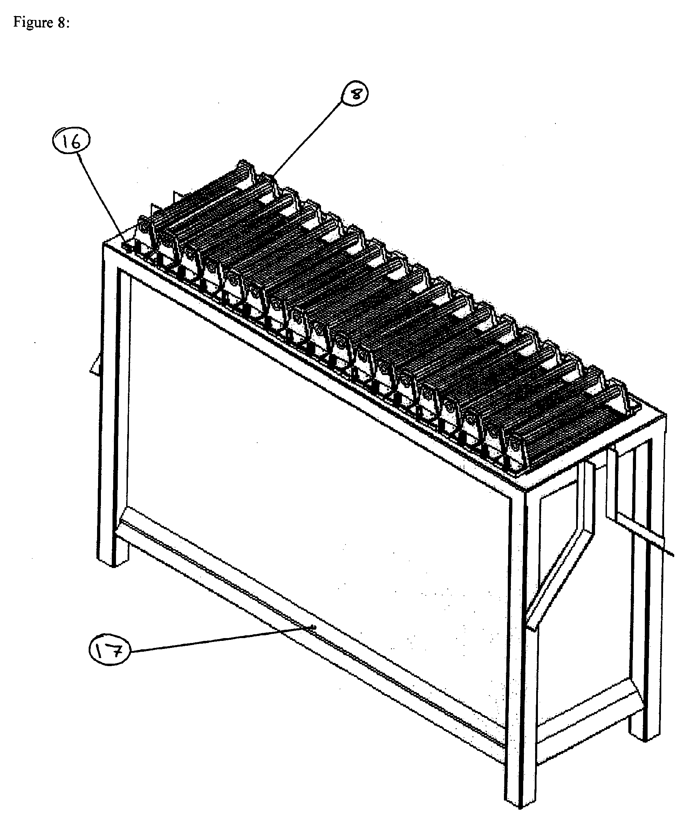

Fig. 8 shows a number of submerged membrane modules 8 assembled within the one frame 17 which would allow ease of assembly, installation and maintenance. The common header pipe 16 is built into this frame 17 and each of the clean water outlets 6 on the membrane modules 8 connect into the common header pipe 16.

A scouring effect is required to keep the membrane 14 surface clean. This is achieved by creating a flow of water and air across the surface of the membrane 14. To create this flow, aeration equipment is used, comprising of one or more air blowers 12 which feed air to an air diffuser 11 which is positioned below the membrane modules 8. The number and type of air diffusers 11 will depend on the dimensions and number of the membrane modules 8. The air fed through the diffuser 11 creates bubbles which rise vertically to the surface of the process tank liquid 14. This upward flow creates a flow across the membrane surface 14, providing the desired scouring effect.

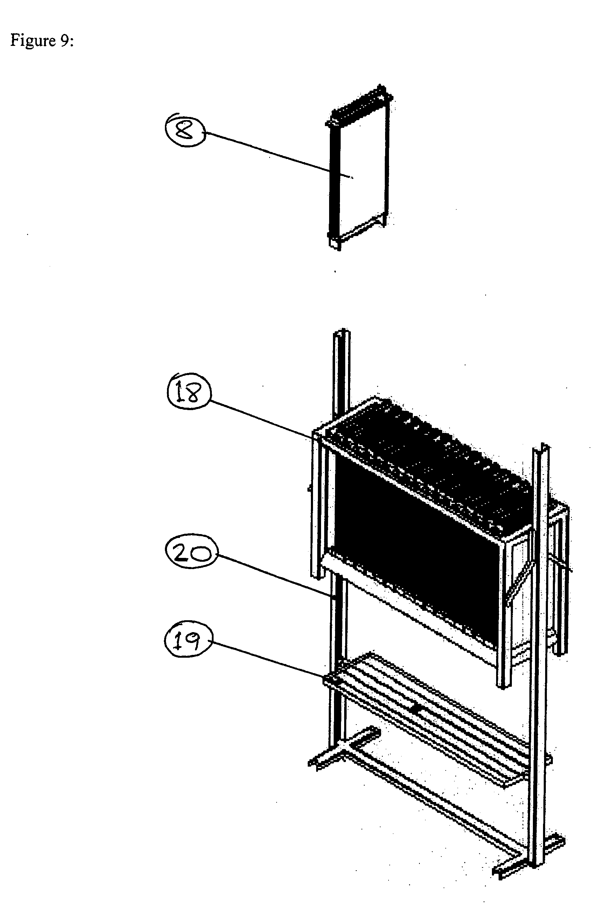

Fig. 9 illustrates a preferred assembly 18 containing 18 filter modules 8 as would be fixed within the process tank 10. Although this number and layout of filter modules 8 is illustrated, the number will vary depending on the particular application.

The aeration diffuser grid 19 comprises a number of air diffusers 11 and is fixed below the module assembly 18. This aeration grid 19 is fed with air by the air blower 12. This aeration grid 19 provides an equal distribution of the air bubbles below the module assembly 18 which contains one or more submerged membrane modules 8. In this way, an equal scouring effect is achieved over all of the modules 8 within the overall assembly 18.

Fig. 9 illustrates a preferred assembly 18 with an aeration grid 19 fixed below it. Both of these are installed on a frame 20 which is fixed in position within the process tank 10. The frame 20 provides a stable and rigid framework on which to install the aeration grid 19 and the module assembly 18. Both the aeration grid 19 and the module assembly 18 are fitted with slots in the end of their frames which fit around the vertical members of the frame 20. This facilitates ease of installation. Once the frame 20 is installed, the aeration grid 19 can be positioned at the top of the frame 20 and lowered into position. The module assembly 18 can then be positioned at the top of the frame 20 and lowered into position, above the diffusion grid 19.

## Claims

1. A submerged membrane filtration module which can be used for the filtering of liquid from within a processing tank comprising;
A rectangular shaped membrane sheet assembly consisting of membranes mounted back to back and separated by a flexible spacer material, fitted with permeate draw off points.
A rigid module frame with a number of vertical members on either end around which the membrane sheet assembly is fixed to provide a folded membrane sheet with the folds separated by a distance equal to the width of the frame's vertical members and the fold lengths equal to the distance the vertical members in either end are separated by.
A module header pipe which acts to collect the filtered liquid from the permeate draw off points.
Means for connecting the permeate draw off points to the module header pipe.

2. A membrane filtration module set forth in claim 1, wherein
an aeration device is used along with the membrane filtration module to provide a scouring effect across the surface of the membrane

3. A membrane filtration module set forth in claim 1, wherein
one permeate draw off point is used per membrane module

4. A membrane filtration module set forth in claim 1, wherein
more than one permeate draw off point is used per membrane module

5. A membrane filtration module set forth in claim 1, wherein
one or more modules are arranged in a row, side by side or end to end to form an assembly of membrane filtration modules

6. A membrane filtration module set forth in claim 5, wherein
the membrane filtration modules are assembled within a common frame
the common frame is fitted with a common header pipe for collection of permeate from all of the membrane filtration modules assembled within the frame

7. A membrane filtration module set forth in claim 5 and claim 6, wherein
a diffusion grid is used which contains adequate air diffusers for the membrane filtration modules, all mounted on a single frame.

8. A membrane filtration module set forth in claim 5 and claim 7, wherein
the membrane filtration module assembly and diffusion grid are assembled on a framework which facilitates the units being raised and lowered vertically within the framework while eliminating horizontal movement in any direction.

9. A membrane filtration module set forth in claim 1, wherein
the aeration device which is used to provide a scouring effect across the surface of the membrane is operated intermittently

10. A membrane filtration module set forth in claim 1, wherein
a combined air and water mix is used with the membrane filtration module to provide a scouring effect across the surface of the membrane

11. A system for treating water to produce a permeate, comprising
one or more membrane filtration modules as detailed in claim 1,
means to provide a pressure drop across the membrane surface,
means to provide a scouring effect across the membrane surface as detailed in claims 2 -10, means of collecting the permeate from the membrane filtration module clean water outlets
